# EUROPEAN PATENT APPLICATION

(11) **EP 4 809 879 A1**
(43) Date of publication of application: **23.09.2026**
(21) Application number: 26182141.7
(22) Date of filing: 26.04.2024
(51) Int. Cl.: A47J 39/00

(54) **WARMING HOLDING CABINET**

(30) Priority: 27.04.2023 US 202363462419 P
(62) Document number(s) of the earlier application(s) in accordance with Art. 76 EPC: 24172874.0 / 4 454 526
(71) Applicant: Carter-Hoffmann LLC, Mundelein, IL 60060 (US)
(72) Inventor: RUSSELL, Gary A, Mundelein, 60060 (US); PUSHPALA, Sreekanth, Mundelein, 60060 (US); GUTIERREZ, Juan, Mundelein, 60060 (US)
(74) Representative: Mathys & Squire

(57) **Abstract**

An holding cabinet is provided. The cabinet encloses first and second cavities and an includes an airflow system for convection heating. The cabinet also includes conductive and radiant heating of food therein. The cabinet includes a baffled flow path to provide even heated air flow through each of the first and second cavities.

## Description

### CROSS-REFERENCE TO RELATED APPLICATIONS

This application claims priority from United States Provisional Application No. 63/462,419 filed on April 27, 2023, the entirety of which is hereby incorporated by reference herein.

### BACKGROUND OF THE INVENTION

This disclosure relates to holding cabinets to receive previously cooked food to maintain them warm for future presentation to a customer or for future processing before serving to a customer.

### BRIEF SUMMARY

A first representative embodiment of the disclosure is provided. The embodiment includes a holding cabinet. The holding cabinet includes a housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity. The air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion. The first and second receiving cavities each comprising a floor and a ceiling, opposite inlet and outlet side walls, and at least one opening to allow access into the respective receiving cavity to allow one or more trays to be inserted within the respective receiving cavity and removed from the respective receiving cavity. The inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity, wherein the baffle includes a vertical portion with an upper edge proximate to a transition between the heat treatment portion and the inlet portion, and an oblique portion that extends from a bottom of the vertical portion to the inlet side wall of the first receiving cavity; the oblique portion comprises a plurality of apertures to allow air to flow from the first plenum and into the second plenum.

Another representative embodiment of the disclosure is provided. The embodiment includes a holding cabinet. The holding cabinet includes a housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity. The air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion. The first and second receiving cavities each comprising a floor and a ceiling, opposite inlet and outlet side walls, and at least one opening to allow access into the respective receiving cavity to allow one or more trays to be inserted within the respective receiving cavity and removed from the respective receiving cavity. The inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity, wherein a transition between the heat treatment portion and the inlet portion includes a narrowing portion that includes a step decrease of cross-sectional area for flow therethrough, and downstream of the narrowing portion includes an increase of cross-sectional area for air flow therethrough.

Another representative embodiment of the disclosure is provided. The embodiment includes a holding cabinet. The housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity. The air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion. The first and second receiving cavities each comprising a floor and a ceiling, opposite inlet and outlet side walls, and at least one opening to allow access into the respective receiving cavity to allow one or more trays to be inserted within the respective receiving cavity and removed from the respective receiving cavity. The inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity. The floor of each of the first and second receiving cavities comprises a heating pad upon which a tray disposed within the respective receiving cavity rests directly upon the heating pad, wherein a top surface of the heating pad is flush mounted with a remaining portion of the floor within the respective receiving cavity. The ceiling of each of the first and second receiving cavities includes a second heating pad. Each of the heating pads mounted upon the floor and each of the heating pads mounted upon the ceiling of the respective first and second receiving cavities includes first and second spaced insulation layers fixed with respect to a side of the heating pad within the respective floor or ceiling. The housing further comprises a shelf that is disposed between the first and second receiving cavities, with a top of the shelf establishing the floor of the first receiving cavity and the bottom of the shelf establishing the ceiling of the second receiving cavity, wherein the heating pad upon the floor of the first receiving cavity and the heating pad upon the ceiling of the second receiving cavity are aligned such that there is a space between the innermost of the first and second spaced insulation layers of the heating pad mounted upon the floor of the first receiving cavity and the first and second spaced insulation layers of the heating pad mounted upon the ceiling of the second receiving cavity

Another representative embodiment of the disclosure is provided. The embodiment includes a holding cabinet. The holding cabinet includes a housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity. The air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion. The first and second receiving cavities each comprise a floor and a ceiling, opposite inlet and outlet side walls, and at least one opening to allow access into the respective receiving cavity to allow one or more trays to be inserted within the respective receiving cavity and removed from the respective receiving cavity. The inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity. The floor of each of the first and second receiving cavities comprises a heating pad upon which a tray disposed within the respective receiving cavity rests directly upon the heating pad, wherein a top surface of the heating pad is flush mounted with a remaining portion of the floor within the respective receiving cavity. The ceiling of each of the first and second receiving cavities includes a second heating pad. The inlet side wall of both of the first and second receiving cavities includes a plurality of first apertures that allows flow from the respective first or second plenum into the respective first or second receiving cavity, wherein the outlet side wall of the both of the first and second receiving cavities includes a second plurality of apertures that allows flow from the respective receiving cavity and into the return portion. All or an overwhelming majority of the second plurality of apertures within each of the first and second receiving cavities are disposed at or below a horizontal plane through respective receiving cavity that is positioned at half of a total height of the respective receiving cavity.

Advantages of the present disclosure will become more apparent to those skilled in the art from the following description of the preferred embodiments of the disclosure that have been shown and described by way of illustration. As will be realized, the disclosed subject matter is capable of other and different embodiments, and its details are capable of modification in various respects. Accordingly, the drawings and description are to be regarded as illustrative in nature and not as restrictive.

### BRIEF DESCRIPTION OF DRAWINGS

FIG. 1 is a perspective view of a warming holding cabinet.
FIG. 2 is the view of the cabinet of FIG. 1 with the doors removed and depicting trays within each zone within the warming holding cabinet.
FIG. 3 is the view of FIG. 2 with an outer wall proximate to the inlet inner wall removed.
FIG. 4 is a front cross-sectional view of the warming cabinet of FIG. 1, and annotated to schematically depict the various air flow paths through the cabinet.
FIG. 5 is a slightly rotated view of the front cross-section of FIG. 4
FIG. 5a is a view of detail R of FIG. 5.
FIG. 6 is a detail cross-sectional view of the shelf of the housing and portions of the inlet portion (120) of the mechanical section with a tray resting upon the floor and heating pad within the first receiving cavity.
FIG. 6a is the view of FIG. 6 with the tray removed to depict and embodiment where the heating pad is flush mounted with the floor.
FIG. 7 is a perspective detail cross-sectional view of a portion of the mechanical section of the housing and schematically showing the air flow therethrough.
FIG. 8 is a perspective detail view of the housing with an outer wall proximate to the inlet inner wall removed.

### DETAILED DESCRIPTION OF THE INVENTION

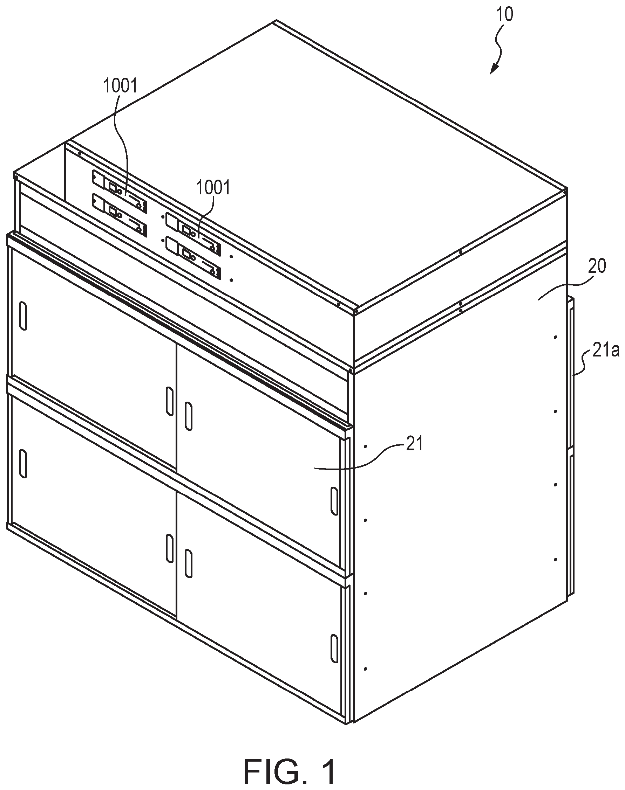

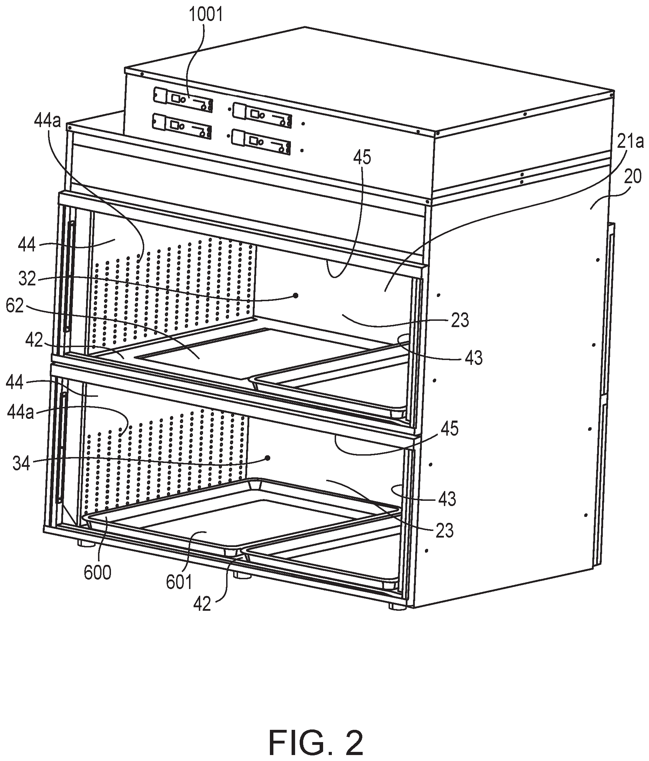

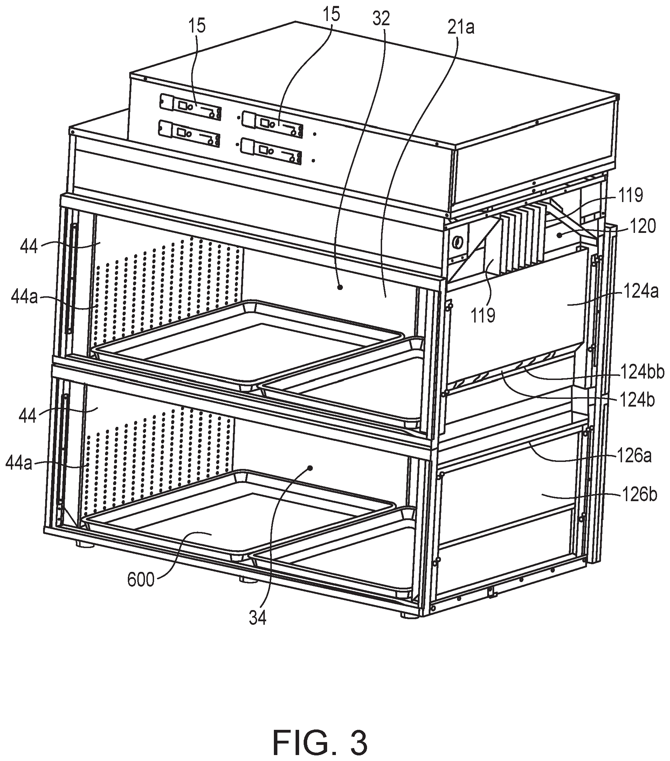

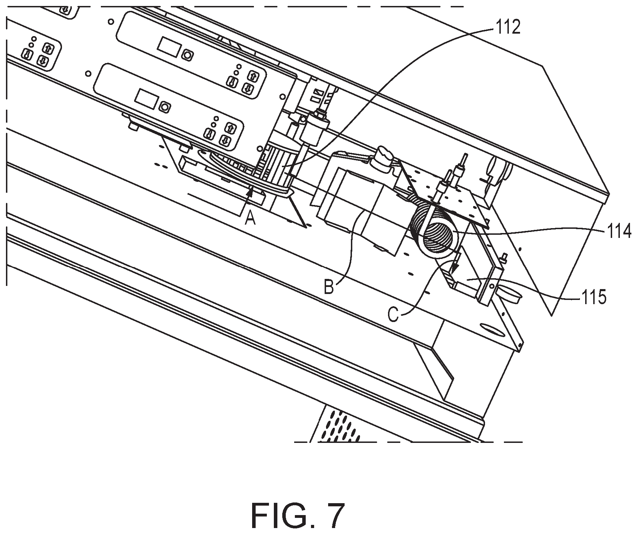

Turning now to FIGs. 1-8, a holding cabinet 10 is provided. The holding cabinet 10 is configured to hold cooked food items for a period of time before presentation to a customer or until the cooked food items are used in another step in a preparation or cooking procedure. The holding cabinet 10 is configured to create a warming environment, which can provide heat to food items within the receiving cavities 32, 34 using one, two, or all of conduction heat transfer, convection heat transfer, and radiant heat transfer to the food items. The structure and operation associated with each of these three types of heat transfer to the food within the holding compartments is discussed below.

The holding cabinet 10 may be configured to hold any types of foods that need to be or are best maintained in a hot or warm environment before serving or further using in a cooking or preparation process. The holding cabinet 10 in some embodiments may be configured to receive food upon trays 600 that rest upon a floor 42 of a receiving cavity, with the food for receipt in the holding cabinet 10 received upon the trays 600. The trays 600 may be conventional trays within the restaurant industry. In some embodiments the food sits directly upon the bottom surface 601 of the trays 600, while in other embodiments, the trays 600 may include racks (not show) therein such that the food resting upon the racks is set off from the bottom surface 601 of the tray 600. In some food storage procedures (or recipes) a liquid may be disposed within the bottom surface 601 of the tray and the food resting upon the rack may be able the liquid. As can be understood with by one of ordinary skill in the art with a thorough review of the subject specification, the liquid may boil, which creates a steam within the holding compartment 32, 34 to further warm or cook the food.

The holding cabinet 10 includes a housing 20 that encloses at least a first receiving cavity (holding compartment) 32 and a second receiving cavity 34. In other embodiments, additional receiving cavities, such as third and fourth receiving cavities (constructed like the first and second 32, 34 discussed herein) may be provided. In a preferred embodiment, the first receiving cavity 32 may be disposed above the second receiving cavity 34 in a vertically stacked arrangement. Alternatively the two receiving cavities 32, 34 may be formed as a row, i.e. at the same height within the housing 20.
In this embodiment, the two cavities 32, 34 may be separated by a vertical wall.

The first and second receiving cavities 32, 34 may be constructed in the same manner, and may have the same size and geometry. A shelf 29 may be positioned between the first and second receiving cavities 32, 34, such that the shelf 29 forms the floor 42 of the first (top) receiving cavity 32 and the ceiling 45 of the second (bottom) receiving cavity 34. In embodiments with three or more vertically stacked receiving cavities shelves 29 may separate the adjacent receiving cavities as discussed herein.

The first and second receiving cavities may include a floor 42, a ceiling 45, an inlet inner wall 43 and an outlet inner wall 44. Each of the first and second receiving cavities includes a side opening 23 to allow trays 600 with food disposed thereon to be placed into an removed from the cavity. The side opening may be on a single side of the housing 20, while in other embodiments like the embodiment depicted in the figures, both opposite (i.e. front and rear) sides of housing may be open to allow access into the cavity therethrough. In some embodiments, the floor 42 may be in-line with the bottom of the opening such that a tray can be slid directly onto the floor 42 when inserted into or removed from the cavity 32, 34. The openings into the first and second cavities 32, 34 may be closed with doors 21 that are moveable (i.e. slid, on hinges, etc.) to enclose the cavity to aid in the retention of heat therein and prevent hot air from blowing out of the cavity when closed, but to be opened to allow access into the cavity 32, 34. In some embodiments, the cavities 32, 34 are configured to receive one, two, or more trays upon the floor 42 and neighboring each other. These embodiments may include the same number of doors 21 as the cavity is configured to receive trays.

The housing 20 further encloses an air flow compartment 110, which includes the air flow plenums and electrical and mechanical components (discussed herein) that result in the heated air flow through the receiving cavities 32, 34 as discussed herein as well as the remaining operations of the cabinet 10.

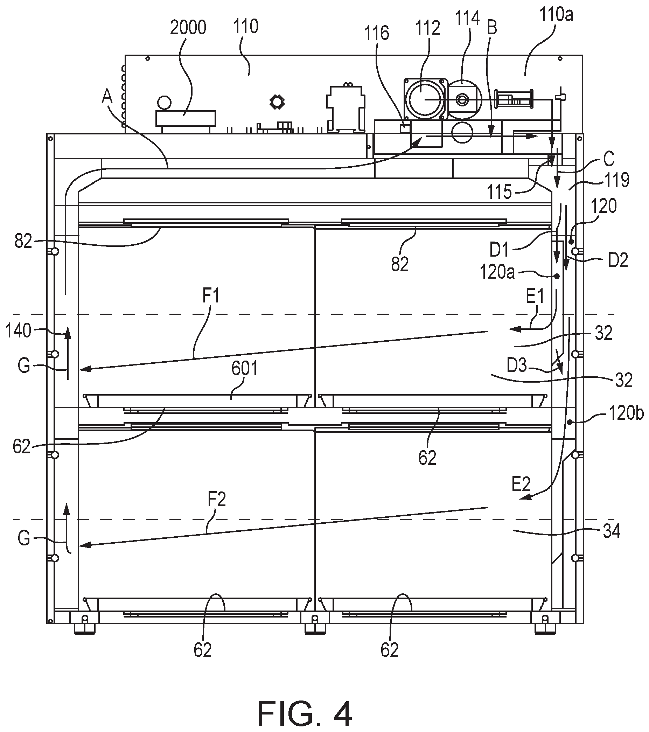

The air flow compartment 110 includes a mechanical section 110a, a return portion 140 and an inlet portion 120. The mechanical section 110a supports and encloses an air handling unit 112 and a heating element 114. The air handling unit 112 may be a fan that draws a suction (arrow A, FIG. 4) of air from the return portion 140, and discharges air (arrow B, FIG. 4) across or proximate to the heating element 114, such that air leaving the fan is heated by the heating element 114. Air flowing past or proximate to the heating element 114 is then directed to the inlet portion 120. Air flows through the inlet portion 120 (arrows D1, D2, D3; FIG. 4) and into one of the first or second receiving cavities 32, 34 (arrows E1, E2; FIG. 4). Air flows through the first or second receiving cavities 32, 34 (arrows F1, F2; FIG. 4) and then flows into the return portion 140 (arrow G; FIG. 4). Air again flows into the mechanical section 110a and is drawn into the air handling unit 112.

The mechanical section 110a may include a temperature sensor 116 (schematic) that measures a temperature of air flowing therethrough. In some embodiments, the temperature sensor 116 may be disposed within the air flow path that flows into the suction of the air handling unit 112. In other embodiments, the temperature sensor may be disposed within the air flow path that discharges from the air handling unit 112, such as before the air flows past the heating element 114.

The temperature sensor 116 may be a thermocouple, RTD, or other types of temperature sensors that can provide real-time signals that are proportional to a measured air temperature that flows past the temperature sensor 116. The temperature sensor 116 may send a signal that is proportional to the measured temperature to a controller 2000 (schematic). The controller 2000 may operate the heating element 114 using conventional temperature feedback control to assist with maintaining the sensed air temperature within a desired temperature band. One of ordinary skill in the art with a thorough review and understanding of this disclosure will be able to select and program a controller 2000 to operate the heating element 114 based upon the measured temperature within merely routine optimization.

In some embodiments, the controller 2000 may sense the position of the doors 21 and cause the air handling unit 112 to stop when a door 21 is opened to avoid pushing the hot air (flow paths F1, F2, FIG. 4) from blowing out of the openings in the housing 20.

The housing 20 may include a transition 115 between the mechanical section 110a and the inlet section 120. The transition 115 includes a step change reduction in the flow area for air flow as the air flow leaves the mechanical section 110a. This step change reduction will be understood to increase the resistance to air flow, i.e. the head loss, or air flow leaving the mechanical section 110a. This step change reduction increases the pressure within the mechanical section 110a at the discharge of the air handling unit 112, and in some embodiments causes the air that approaches the transition to exhibit turbulent flow. In some embodiments, the transition 115 may be a 50% reduction in flow area, while in other embodiments the transition 115 may result in a step reduction of over 50% such as within a range of 50% to 75%, inclusive of all values within this range.

The transition 115 may include a constant flow area along its length, while in other embodiments the transition 115 may include a changing (decreasing) flow area along its length such that the transition 115 acts as a nozzle along its length.

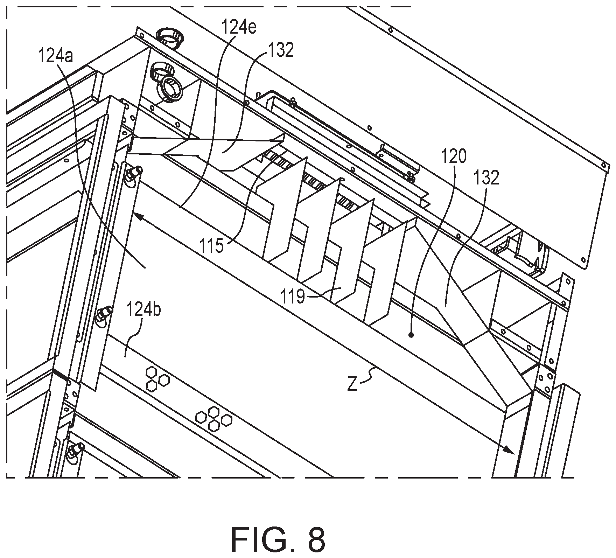

In some embodiments, after the transition 115, the flow area within the entry of the inlet section 120 may include a step increase in flow area, such as a step increase to the same or even larger flow area that existed within the mechanical section 110a that bordered the transition 115. This step increase may aid the air flow leaves the transition 115 to a laminar flow as the air approaches the baffle 120, discussed below. In other embodiments, depicted in FIG. 8, after the transition 115, the flow area within the entry of the inlet section 120 may increase for a portion of the inlet section 120 downstream of the transition, where the inlet section 120 may include angled walls 132 to increase the flow area. The angled walls 132 may reach the full width of the housing (i.e. the full space within the housing inside of the structural and insulative walls that construct the housing within the inlet section 120) just above the top edge 124e of the baffle 124, as discussed below.

In some embodiments, the inlet portion of the inlet section (i.e. just downstream of the transition 115) may include a plurality of vertical separators 119 that extend from the transition, or just below the transition 115 with an open space above top edges of the vertical separators 119 and below the transition 115. FIG. 8 depicts 4 parallel separators 119, but in some embodiments six, eight or other numbers of separators 119 may be provided. The separators 119 may be consistently spaced and extend across the front to back length of the transition 115 (see FIG. 8), or may extend at a larger total area than the front to back width of the transition 115. The separators 119 may serve to urge laminar flow through the inlet section 120 before reaching the baffle 124, and/or to assist with evening out the air mass flow rate in the front to back direction (i.e. the direction of arrows Z in FIG. 8).

The inlet section 120 includes a baffle 124 that is positioned with a top edge 124e below the transition 115. The baffle 124 separates air (arrow C) that leaves the transition 115 into a first flow path D1 through a first plenum 120a that is directed to flow into the first receiving cavity 32 and through a second plenum 120b that directs air to flow in a second flow path D2 that is directed to flow into the second receiving cavity 34. The baffle 124 includes a vertical portion 124a that is positioned below the transition 115 (and below the separators 119 when provided). The vertical portion 124a may be planar along its length. The vertical portion 124a may connect to an oblique portion 124b at a bottom of the vertical portion 124. In embodiments where the vertical portion is planar along its length the connection with the oblique portion 124b is at the bottom edge of the vertical portion 124a. The oblique portion 124b is attached to the inner inlet wall 43 of the first receiving cavity 32. In some embodiments, the inner inlet wall 43 may be multiple sheets that are fixed together or with respect to each other to establish a wall between the receiving cavity and the inlet section 120. The oblique portion 124b may connect to the inner inlet wall 43 of the first receiving cavity at a distance above the floor 42 of the first receiving cavity 32.

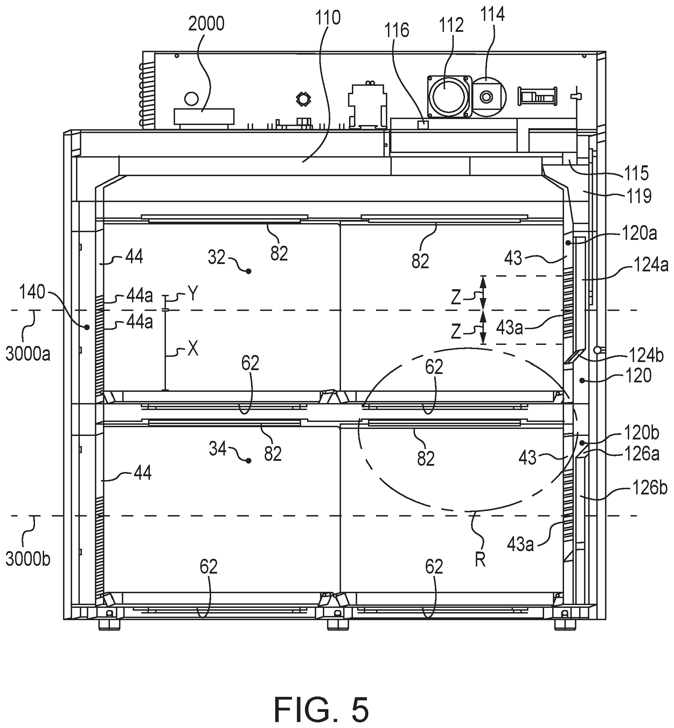

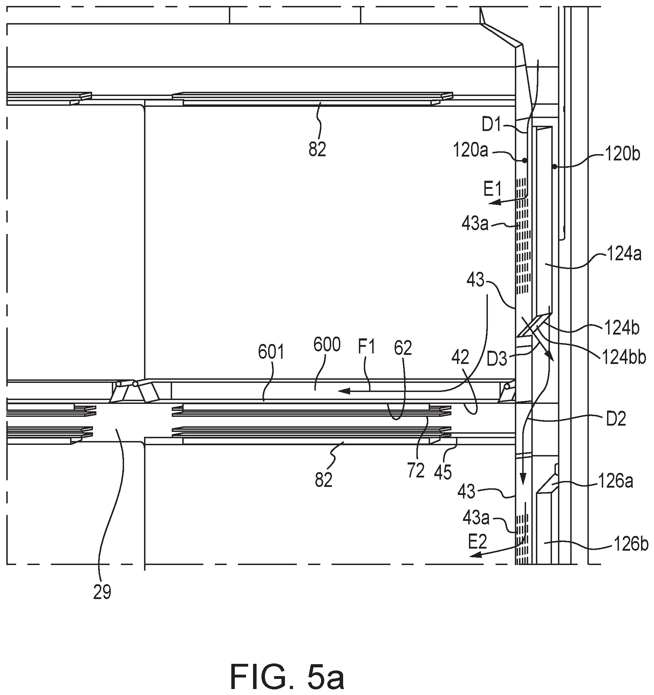

In some embodiments, the oblique portion 124a may include one or a plurality of apertures 124c therein that allows air flow from the first plenum 120a and into the second plenum 120b (air flow D3 depicted in FIGs. 4 and 5a) and toward the second baffle 126 (discussed below).

The construction and arrangement of the baffle 124 is provided to separate the air entering the inlet section 120 into two even quantities of air such that about the same mass flow rate of air flows into and through each of the first and second receiving cavities 32, 34. The term about the same is defined herein to include the exact same as well as ratios where the mass flow rates of air into the first and second receiving cavities 32, 34 is are within 15 percent of each other, including all differences below 15 percent. Because air through the second plenum 120b needs to flow through a longer distance until reaching the second receiving cavity 34, in some embodiments, the size of the cross-sectional area of the second plenum 120b (along the portion that flows adjacent to the vertical portion 124a) may be larger than the cross-sectional area of the first plenum 120a to balance the flow. The apertures 124c may be provided, sized, and positioned to allow some flow from the first plenum 120a and into the second plenum 120b to further balance the flow into the first and second receiving cavities 32, 34.

In some embodiments, a second baffle 126 is provided to decrease the cross-sectional flow area within the second plenum 120b below the oblique portion 124b. The second baffle 126 may include a second oblique portion 126a and a vertical portion 126b below the second oblique portion 126a. The second oblique portion 126a may be parallel to and below the oblique portion 124b of the baffle. The second oblique portion 126a may extend from an outer wall of the housing 20 that is most proximate to and parallel with the inlet inner wall 43 of the second receiving cavity 34 and extend toward the inlet inner wall 43.

The first and second receiving cavities 32, 34 are configured to receive air (flows E1, E2; FIG. 4) from the inlet portion 120 through the first inlet wall 43 that borders the inlet portion 120. Each of the first and second receiving cavities 32, 34 have a plurality of inlet apertures 43a that allow for flow from the inlet portion 120 into the respective cavity. Each of the first and second receiving cavities 32, 34 further have a plurality of outlet apertures 44a that allow for air flow from the cavity into the return portion 140. The plurality of outlet apertures 44a are upon the first outlet wall 44 that borders the return portion 140.

The first receiving cavity 32 is positioned such that air flowing through the first plenum 120a flows through the plurality of inlet apertures 43a disposed within the first cavity 32 to flow therein. The second receiving cavity 34 is positioned such that air flowing through the second plenum 120b flows through the plurality of inlet apertures 43a disposed within the second cavity 34 to flow therein.

The plurality of inlet apertures 43a may be consistently spaced from adjacent first apertures and may be aligned upon the inlet inner wall 43 to form a repeating pattern. In other embodiments, the spacing of specific inlet apertures 43a from neighboring first apertures 43a may vary depending upon the location of the specific inlet aperture 43a upon the inlet inner wall 43. For example, the inlet apertures 43a near a center of the front to rear width of the respective cavity may be spaced at a further distance from adjacent inlet apertures 43a than first apertures near the front or rear side of the cavity (with the front being a side of the housing 20 with a door 21, and the rear being the opposite side of the housing also in some embodiments having a door 21a), which promotes even air mass flow rate across the entire front to rear width of the cavity. Similarly the inlet apertures 43a near the center of the front to rear width of the respective cavity may have a cross-sectional area that is smaller than first apertures 43a that are near the front or rear side of the cavity, to promote even mass flow rate across the entire front to rear width of the cavity.

The plurality of first inlet apertures 43a within the first receiving cavity 32 are aligned such that all of the inlet apertures 43a are positioned upon the inner inlet wall 43 above an intersection of the oblique portion 124b of the baffle 124 and the inner inlet wall 43 such that in some embodiments all of the air flowing into the first plenum 120a flows into the first receiving cavity 32 through the inlet apertures 43a. In other embodiments where the oblique portion 124b has a plurality of holes 124c, some of the air that enters the first plenum 120a flows into the second plenum 120b through the holes 124c (flow path D3; FIG. 4).

The plurality of second, outlet apertures 44a are disposed upon the outlet inner wall 44 to allow air to flow from the respective receiving cavity 32, 34 and into the return portion 140 (FIG. 4). disposed within the second cavity 34 to flow therein.

The plurality of outlet apertures 44a may be consistently spaced from adjacent outlet apertures and may be aligned upon the outlet inner wall 44 to form a repeating pattern. In other embodiments, the spacing of specific outlet apertures 44a from neighboring first apertures 44a may vary depending upon the location of the specific outlet aperture 44a upon the outlet inner wall 44. For example, the outlet apertures 44a near a center of the front to rear width of the respective cavity may be spaced at a further distance from adjacent apertures 44a than first apertures near the front or rear side of the, which promotes even air mass flow rate across the entire front to rear width of the cavity. Similarly the outlet apertures 44a near the center of the front to rear width of the respective cavity may have a cross-sectional area that is smaller than outlet apertures 44a that are near the front or rear side of the cavity, to promote even mass flow rate across the entire front to rear width of the cavity.

Each receiving cavity 32, 34 is sized with a shape, typically with a rectangular or square base and a height. In some embodiments, the first plurality of inlet apertures 43a may be disposed upon the inlet inner wall 43 such that the same or about the same number of inlet apertures 43a are disposed above a horizontal plane 3000a, 3000b that is halfway up the height of the respective cavity 32, 34 (FIG. 4) as the number of apertures 43a that are disposed below the horizontal plane 3000a, 3000b. The horizontal plane 3000a, 3000b may cross through some of the apertures 43a.

In some embodiments, the plurality of outlet apertures 44a are positioned upon the outlet inner wall 44 such that in some embodiments all, or in other embodiments an overwhelming majority, of the outlet apertures 44a are positioned below the horizontal plane 3000a, 3000b of the respective receiving cavity 32, 34. In some embodiments the upper-most apertures 44a may be positioned such that the respective horizontal plane 3000a, 3000b extends through the upper-most apertures 44a. The term overwhelming majority is defined herein to include 75% or more of the total number of apertures 44a up to 100% of the total number of apertures. In some embodiments where some of the apertures 44a are disposed above the respective plane 3000a, 3000b (FIG. 5) all of the apertures 44a that are above the respective plane 3000a, 3000b may be positioned such that they are closer to the respective plane 3000a, 3000b than they are to the ceiling 45 of the respective cavity 32, 34.

In some embodiments, the plurality of inlet apertures 43 are positioned upon the inlet inner wall 43 such that as many inlet apertures 43a are disposed above the horizontal plane 3000a, 3000b as are disposed below the horizontal plane. In some embodiments, some of the inlet apertures 43a are disposed such that the horizontal plane runs through the inlet apertures 43a.

One of ordinary skill in the art with a thorough review and understanding of this disclosure will understand that the placement of all or an overwhelming majority of the outlet apertures 44a at or below the respective horizontal plane 3000a, 3000b will cause the air flowing through the cavity to flow downwardly toward the trays 600 disposed within the cavity to more interact with the food disposed upon the trays, than in embodiments if many of the outlet holes were above the plane 3000a, 3000b (which would allow air to flow from relatively upwardly positioned inlet apertures 43a directly to relatively upwardly (i.e. above the plane 3000a, 3000b) positioned outlet apertures 44a, such that that air flow would not interact with the food positioned within the cavity 32, 34. The positioning of the outlet apertures 44a to promote downward flow within the cavity (F1, F2; FIG. 4 - schematic) has been found to promote turbulent air flow across the trays 600 and the food upon the trays, which improves heat transfer efficiency from the air flowing to the food.

The air heated air flow through the first and second receiving cavities 32, 34 as discussed above establishes a convection heating system of heating food disposed within the cavities. The device 10 further includes a conduction and radiant heating system as discussed herein. The floor 42 within each receiving cavity 32, 34 includes one or multiple heating pads 62 (specifically the a number of heating pads 62 spaced upon the floor 42 that is equal to the number of trays 600 that can be received upon the floor of the cavity) disposed thereon. The heating pads 62 are electric resistance heating pads that generate heat due in proportion to the amount of electric current that flows through the pads. The heating pads 62 may be operated by the controller 2000 to adjust the duty cycle of the heating pad 62 and the operating temperature of the pad 62. The housing 20 may include a display 15, or in some embodiments specific displays for each zone (e.g. location within each cavity to receive different trays - e.g. the top left display corresponds to the zone with in the left side of the top cavity 32) that displays operational information about the heating pad 62. The display 15 may also include measured ambient temperature within the specific zone.

The heating pads 62 may be flush mounted within a recess in the floor 42 (or may make up the structure of the floor 42 at the location with the heating pad 62 such that a tray 600 can smoothly slide between a portion of the floor 42 and the heating pad 62, and such that the bottom of tray 600 rests directly upon the heating pad 62.

In some embodiments, the bottom side of the heating pad 62 (i.e. the side opposite from the exposed side of the heating pad 62 that forms a part of the floor 42) may contact or be adjacent to insulative materials 72 to establish resistance to heat flow therethrough. In some embodiments, one or two or more layers 72 of planar insulative materials may be fixed to the bottom side of the heating pad 62. In embodiments with two planar insulative materials 72 may be arranged with an air gap between the two layers, or with a structural component between the two layers. A further structural component may be outboard of the outermost insulative layer 72.

As can be understood, the heating pad 62, during operation, provides heat directly to the tray 600 that rests thereon via conduction heat transfer. The heating pad 62 also radiates a portion of its heat upwardly toward the tray 600 and the food that rests upon the tray 600.

The ceiling 45 of each receiving cavity 32, 34 may also include one or more top heating elements 82, which may be resistive heating elements. The top heating elements 82 during operation generate heat that is radiated downwardly into the respective zone and onto the food that is disposed upon the tray 600 within the zone below the top heating element 82. For example, each zone may include a top heating element 82 that is disposed above the zone, and above the corresponding heating pad 62 for each zone. The top heating elements 82 are fixed to the ceiling (and therefore extend minimally downward into the cavity from the ceiling) or may form a portion of the ceiling 45. The top heating elements 45 are controlled by the controller 2000, similar to the heating pads 62 discussed above. The display 15, or the specific display 15 associated with each zone, may include operational information about each top heating element 82 that is disposed above the respective zone.

As with the heating pads 62, the back side of the top heating element 82 (i.e. the opposite the side exposed within the cavity) may contact or be adjacent to insulative materials 92 to establish resistance to heat flow therethrough. In some embodiments, one or two or more layers 92 of planar insulative materials may be fixed to the back side of the top heating element 82. In embodiments with two planar insulative materials 92 may be arranged with an air gap between the two layers, or with a structural component between the two layers. A further structural component may be outboard of the outermost insulative layer 92.

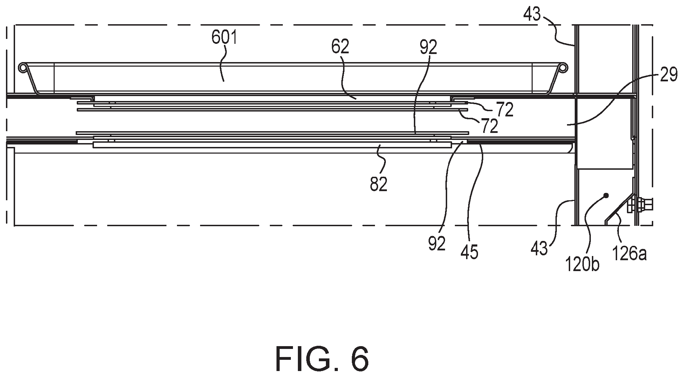

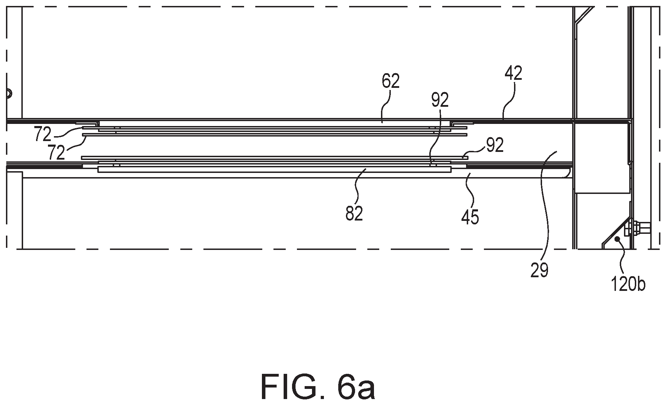

As discussed above, a shelf 29 is formed between the floor 42 (top of the shelf 29) of the first receiving cavity 32 and the ceiling 45 of the second receiving cavity 34 (bottom of shelf). As depicted in FIG. 6, the heating pad 62 and associated insulative layers 72 is disposed within the shelf 29. Similarly the top heating element 82 and associated insulative layers 92 is disposed upon (with respect to the top heating element 82) and within (with respect to the insulative layers 92) the shelf 29. In some embodiments, there is a space between an inner-most (i.e. furthest from the heating pad 62) insulative layer 72 associated with the heating pad 62 and the inner-most (i.e. furthest from the top heating element 82) insulative layer associated with the top heating element 82.

One of ordinary skill in the art with a thorough review of the subject disclosure will understand how to modify the placement and shape of the baffle 124 and the second baffle 126 in embodiments where the first and second receiving cavities 32, 34 are positioned horizontally in a row instead of vertically to result in about the same mass flow rate of air into each of the first and second (horizontally aligned) cavities. For example, plenums downstream of a transition 115 within an inlet portion 120 may be provided to direct air to the inlet inner wall 43 of each plenum, and each outlet inner wall 44 may allow air leaving each cavity to enter a return portion 140. In some embodiments, a wall that separates the two adjacent horizontally aligned cavities may include the inlet portion 120 and a baffle is provided to divide the flow of air (like flow paths D1 and D2 of the embodiment disclosed herein) such that the flow to both cavities is about the same. The outer inner wall 44 of each cavity may be on opposite sides of the housing, and with return flows G of air that flows through the apertures in the outlet inner wall 44 meeting within the mechanical section 110a proximate a suction of the air handling unit 112 (air flow A).

While the preferred embodiments of the disclosed have been described, it should be understood that the invention is not so limited and modifications may be made without departing from the disclosure. The scope of the disclosure is defined by the appended claims, and all devices that come within the meaning of the claims, either literally or by equivalence, are intended to be embraced therein.

The specification and be readily understood with reference to the following representative paragraphs:

Representative Paragraph 1: A holding cabinet, comprising:
a housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity;
the air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion;
the first and second receiving cavities each comprising a floor and a ceiling, opposite inlet and outlet side walls, and at least one opening to allow access into the respective receiving cavity to allow one or more trays to be inserted within the respective receiving cavity and removed from the respective receiving cavity;
the inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity, wherein the baffle includes a vertical portion with an upper edge proximate to a transition between the heat treatment portion and the inlet portion, and an oblique portion that extends from a bottom of the vertical portion to the inlet side wall of the first receiving cavity; the oblique portion comprises a plurality of apertures to allow air to flow from the first plenum and into the second plenum.

Representative Paragraph 2: The holding cabinet of Representative Paragraph 1, further comprising a transition between the heat treatment portion and the inlet portion includes a narrowing portion that includes a step decrease of cross-sectional area for flow therethrough, and downstream of the narrowing portion includes an increase of cross-sectional area for air flow therethrough.

Representative Paragraph 3: The holding cabinet of Representative Paragraph 2, further comprising a plurality of vertical separators disposed below the step change increase of cross-sectional area to separate the air flowing therethrough into a plurality of separate paths, wherein the vertical separators have bottom ends that are proximate to the upper edge of the vertical portion of the baffle.

Representative Paragraph 4: The holding cabinet of Representative Paragraph 3, wherein the oblique portion contacts the inlet side wall of the first receiving cavity at a distance above the floor of the first receiving cavity.

Representative Paragraph 5: The holding cabinet of Representative Paragraph 4, wherein the inlet side wall of both of the first and second receiving cavities includes a plurality of first apertures that allows flow from the respective first or second plenum into the respective first or second receiving cavity, wherein the outlet side wall of the both of the first and second receiving cavities includes a second plurality of apertures that allows flow from the respective receiving cavity and into the return portion;
wherein all of the plurality of first apertures of the first receiving cavity are disposed above the position were the oblique portion contacts the inlet side wall of the first receiving cavity.

Representative Paragraph 6: The holding cabinet of Representative Paragraph 5, wherein all or an overwhelming majority of the second plurality of apertures within each of the first and second receiving cavities are disposed at or below a horizontal plane through respective receiving cavity that is positioned at half of a total height of the respective receiving cavity.

Representative Paragraph 7: The holding cabinet of Representative Paragraph 6, wherein a same number of the plurality of first apertures are disposed above the horizontal plane as the number of the plurality of first apertures that are disposed below the horizontal plane.

Representative Paragraph 8: The holding cabinet of any one of Representative Paragraphs 1-7, wherein the heat treatment portion comprises an air handling unit that includes a suction inlet that draws suction from air flowing from the return portion, wherein the air handling unit discharges air through a heating element disposed within the heat treatment portion.

Representative Paragraph 9: The holding cabinet of Representative Paragraph 8, further comprising a temperature detector disposed within the heat treatment portion and disposed within an air flow path proximate the suction inlet of the air handling unit, and further comprising a controller to control the operation of the heating element based upon a measured temperature of the temperature detector.

Representative Paragraph 10 A holding cabinet, comprising:
a housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity;
the air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion;
the first and second receiving cavities each comprising a floor and a ceiling, opposite inlet and outlet side walls, and at least one opening to allow access into the respective receiving cavity to allow one or more trays to be inserted within the respective receiving cavity and removed from the respective receiving cavity;
the inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity, wherein a transition between the heat treatment portion and the inlet portion includes a narrowing portion that includes a step decrease of cross-sectional area for flow therethrough, and downstream of the narrowing portion includes an increase of cross-sectional area for air flow therethrough.

Representative Paragraph 11: The holding cabinet of Representative Paragraph 10, wherein the baffle includes a vertical portion with an upper edge proximate to the heat treatment portion, and an oblique portion that extends from a bottom edge of the vertical portion to the inlet side wall of the first receiving cavity;
further comprising a second baffle within the inlet portion and forming a boundary of the second plenum, wherein the second baffle is extends from an outlet side wall of the housing that is parallel to and proximate to the inlet side wall of the second receiving cavity and extends toward the inlet side wall of the second receiving cavity, wherein the second baffle is disposed below the first baffle.

Representative Paragraph 12: The holding cabinet of Representative Paragraph 11, wherein the second baffle is parallel to the oblique portion of the baffle.

Representative Paragraph 13: The holding cabinet of Representative Paragraph 12, wherein the oblique portion comprises a plurality of apertures to allow air to flow therethrough, wherein air flowing through the plurality of apertures flows into the second plenum and toward the second baffle.

Representative Paragraph 14: The holding cabinet of Representative Paragraph 13, wherein the baffle is configured to divide the air into the first and second plenums from the transition such that about the same volume of air enters the first plenum as the second plenum.

Representative Paragraph 15: The holding cabinet of any one of Representative Paragraphs 10-14, wherein the heat treatment portion comprises an air handling unit that includes a suction inlet that draws suction from air flowing from the return portion, wherein the air handling unit discharges air through a heating element disposed within the heat treatment portion,
further comprising a temperature detector disposed within the heat treatment portion and disposed within an air flow path proximate the suction inlet of the air handling unit, and further comprising a controller to control the operation of the heating element based upon a measured temperature of the temperature detector.

Representative Paragraph 16: A holding cabinet, comprising:
a housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity;
the air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion;
the first and second receiving cavities each comprising a floor and a ceiling, opposite inlet and outlet side walls, and at least one opening to allow access into the respective receiving cavity to allow one or more trays to be inserted within the respective receiving cavity and removed from the respective receiving cavity;
the inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity;
wherein the floor of each of the first and second receiving cavities comprises a heating pad upon which a tray disposed within the respective receiving cavity rests directly upon the heating pad, wherein a top surface of the heating pad is flush mounted with a remaining portion of the floor within the respective receiving cavity;
wherein the ceiling of each of the first and second receiving cavities includes a second heating pad;
wherein each of the heating pads mounted upon the floor and each of the heating pads mounted upon the ceiling of the respective first and second receiving cavities includes first and second spaced insulation layers fixed with respect to a side of the heating pad within the respective floor or ceiling;
wherein the housing further comprises a shelf that is disposed between the first and second receiving cavities, with a top of the shelf establishing the floor of the first receiving cavity and the bottom of the shelf establishing the ceiling of the second
receiving cavity, wherein the heating pad upon the floor of the first receiving cavity and the heating pad upon the ceiling of the second receiving cavity are aligned such that there is a space between the innermost of the first and second spaced insulation layers of the heating pad mounted upon the floor of the first receiving cavity and the first and second spaced insulation layers of the heating pad mounted upon the ceiling of the second receiving cavity.

Representative Paragraph 17: The holding cabinet of Representative Paragraph 16, wherein the baffle includes a vertical portion with an upper edge proximate to a transition between the heat treatment portion and the inlet portion, and an oblique portion that extends from a bottom edge of the vertical portion to the inlet side wall of the first receiving cavity; the oblique portion comprises a plurality of apertures to allow air to flow from the first plenum and into the second plenum.

Representative Paragraph 18: The holding cabinet of Representative Paragraph 17, further comprising a transition between the heat treatment portion and the inlet portion includes a narrowing portion that includes a step decrease of cross-sectional area for flow therethrough, and downstream of the narrowing portion includes an increase of cross-sectional area for air flow therethrough.

Representative Paragraph 19: The holding cabinet of Representative Paragraph 17, wherein the inlet side wall of both of the first and second receiving cavities includes a plurality of first apertures that allows flow from the respective first or second plenum into the respective first or second receiving cavity, wherein the outlet side wall of the both of the first and second receiving cavities includes a second plurality of apertures that allows flow from the respective receiving cavity and into the return portion;
wherein all of the plurality of first apertures of the first receiving cavity are disposed above the position were the oblique portion contacts the inlet side wall of the first receiving cavity,
wherein all or an overwhelming majority of the second plurality of apertures within each of the first and second receiving cavities are disposed at or below a horizontal plane through respective receiving cavity that is positioned at half of a total height of the respective receiving cavity, and
wherein a same number of the plurality of first apertures are disposed above the horizontal plane as the number of the plurality of first apertures that are disposed below the horizontal plane.

Representative Paragraph 20: A holding cabinet, comprising:
a housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity;
the air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion;
the first and second receiving cavities each comprising a floor and a ceiling, opposite inlet and outlet side walls, and at least one opening to allow access into the respective receiving cavity to allow one or more trays to be inserted within the respective receiving cavity and removed from the respective receiving cavity;
the inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity;
wherein the floor of each of the first and second receiving cavities comprises a heating pad upon which a tray disposed within the respective receiving cavity rests directly upon the heating pad, wherein a top surface of the heating pad is flush mounted with a remaining portion of the floor within the respective receiving cavity;
wherein the ceiling of each of the first and second receiving cavities includes a second heating pad;
the inlet side wall of both of the first and second receiving cavities includes a plurality of first apertures that allows flow from the respective first or second plenum into the respective first or second receiving cavity, wherein the outlet side wall of the both of the first and second receiving cavities includes a second plurality of apertures that allows flow from the respective receiving cavity and into the return portion;
wherein all or an overwhelming majority of the second plurality of apertures within each of the first and second receiving cavities are disposed at or below a horizontal plane through respective receiving cavity that is positioned at half of a total height of the respective receiving cavity.

Representative Paragraph 21: The holding cabinet of Representative Paragraph 20, wherein a same number of the plurality of first apertures are disposed above the horizontal plane as the number of the plurality of first apertures that are disposed below the horizontal plane.

Embodiments of the disclosure are set out in the following numbered clauses.
1. A holding cabinet, comprising:
   a housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity;
   the air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion;
   the first and second receiving cavities each comprising a floor and a ceiling, opposite inlet and outlet side walls, and at least one opening to allow access into the respective receiving cavity to allow one or more trays to be inserted within the respective receiving cavity and removed from the respective receiving cavity;
   the inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity, wherein the baffle includes a vertical portion with an upper edge proximate to a transition between the heat treatment portion and the inlet portion, and an oblique portion that extends from a bottom of the vertical portion to the inlet side wall of the first receiving cavity; the oblique portion comprises a plurality of apertures to allow air to flow from the first plenum and into the second plenum.
2. The holding cabinet of clause 1, further comprising a transition between the heat treatment portion and the inlet portion includes a narrowing portion that includes a step decrease of cross-sectional area for flow therethrough, and downstream of the narrowing portion includes an increase of cross-sectional area for air flow therethrough.
3. The holding cabinet of clause 2, further comprising a plurality of vertical separators disposed below the step change increase of cross-sectional area to separate the air flowing therethrough into a plurality of separate paths, wherein the vertical separators have bottom ends that are proximate to the upper edge of the vertical portion of the baffle.
4. The holding cabinet of clause 3, wherein the oblique portion contacts the inlet side wall of the first receiving cavity at a distance above the floor of the first receiving cavity.
5. The holding cabinet of clause 4, wherein the inlet side wall of both of the first and second receiving cavities includes a plurality of first apertures that allows flow from the respective first or second plenum into the respective first or second receiving cavity, wherein the outlet side wall of the both of the first and second receiving cavities includes a second plurality of apertures that allows flow from the respective receiving cavity and into the return portion;
   wherein all of the plurality of first apertures of the first receiving cavity are disposed above the position were the oblique portion contacts the inlet side wall of the first receiving cavity.
6. The holding cabinet of clause 5, wherein all or an overwhelming majority of the second plurality of apertures within each of the first and second receiving cavities are disposed at or below a horizontal plane through respective receiving cavity that is positioned at half of a total height of the respective receiving cavity.
7. The holding cabinet of clause 6, wherein a same number of the plurality of first apertures are disposed above the horizontal plane as the number of the plurality of first apertures that are disposed below the horizontal plane.
8. The holding cabinet of any one of clauses 1-7, wherein the heat treatment portion comprises an air handling unit that includes a suction inlet that draws suction from air flowing from the return portion, wherein the air handling unit discharges air through a heating element disposed within the heat treatment portion.
9. The holding cabinet of clause 8, further comprising a temperature detector disposed within the heat treatment portion and disposed within an air flow path proximate the suction inlet of the air handling unit, and further comprising a controller to control the operation of the heating element based upon a measured temperature of the temperature detector.
10.A holding cabinet of any one of clauses 1-9, comprising:
   wherein the floor of each of the first and second receiving cavities comprises a heating pad upon which a tray disposed within the respective receiving cavity rests directly upon the heating pad, wherein a top surface of the heating pad is flush mounted with a remaining portion of the floor within the respective receiving cavity;
   wherein the ceiling of each of the first and second receiving cavities includes a second heating pad;
   wherein each of the heating pads mounted upon the floor and each of the heating pads mounted upon the ceiling of the respective first and second receiving cavities includes first and second spaced insulation layers fixed with respect to a side of the heating pad within the respective floor or ceiling;
   wherein the housing further comprises a shelf that is disposed between the first and second receiving cavities, with a top of the shelf establishing the floor of the first receiving cavity and the bottom of the shelf establishing the ceiling of the second receiving cavity, wherein the heating pad upon the floor of the first receiving cavity and the heating pad upon the ceiling of the second receiving cavity are aligned such that there is a space between the innermost of the first and second spaced insulation layers of the heating pad mounted upon the floor of the first receiving cavity and the first and second spaced insulation layers of the heating pad mounted upon the ceiling of the second receiving cavity.
11. The holding cabinet of clause 10, wherein the inlet side wall of both of the first and second receiving cavities includes a plurality of first apertures that allows flow from the respective first or second plenum into the respective first or second receiving cavity, wherein the outlet side wall of the both of the first and second receiving cavities includes a second plurality of apertures that allows flow from the respective receiving cavity and into the return portion;
   wherein all of the plurality of first apertures of the first receiving cavity are disposed above the position were the oblique portion contacts the inlet side wall of the first receiving cavity,
   wherein all or an overwhelming majority of the second plurality of apertures within each of the first and second receiving cavities are disposed at or below a horizontal plane through respective receiving cavity that is positioned at half of a total height of the respective receiving cavity, and
   wherein a same number of the plurality of first apertures are disposed above the horizontal plane as the number of the plurality of first apertures that are disposed below the horizontal plane.

## Claims

1. A holding cabinet (10), comprising:
a housing (20) that includes first and second receiving cavities (32, 34) and an air flow compartment (110), the first and second receiving cavities (32, 34) each configured to receive one or more trays (600) therein, the first and second receiving cavities (32, 34) arranged in a vertically stacked arrangement with the first receiving cavity (32) disposed above the second receiving cavity (32);
the air flow compartment (110) comprises a heat treatment portion (110a), an inlet portion (120), and a return portion (140), wherein air flows from the heat treatment portion (110a) and into the inlet portion (120), from the inlet portion and into one of the first or second receiving cavity (32, 34), from the respective receiving cavity into the return portion (140), and from the return portion to the heat treatment portion (110a);
the first and second receiving cavities (32, 24) each comprising a floor (42) and a ceiling (45), opposite inlet and outlet side walls (43, 44), and at least one opening to allow access into the respective receiving cavity (32, 34) to allow one or more trays (600) to be inserted within the respective receiving cavity and removed from the respective receiving cavity;
the inlet portion (120) comprises a baffle (124) that establishes a first plenum (120a) and a second plenum (120b), wherein the first plenum (120a) is aligned to direct air flowing therethrough into the first receiving cavity (32) and the second plenum (120b)is aligned to direct air flowing therethrough into the second receiving cavity (34),
further comprising a transition (115) between the heat treatment portion (110a) and the inlet portion (120) includes a narrowing portion that includes a step decrease of cross-sectional area for flow therethrough, and downstream of the narrowing portion includes an increase of cross-sectional area for air flow therethrough.

2. The holding cabinet of claim 1, further comprising a plurality of vertical separators (119) disposed below the step change increase of cross-sectional area to separate the air flowing therethrough into a plurality of separate paths, wherein the vertical separators have bottom ends that are proximate to the baffle (124).

3. The holding cabinet of claim 2, wherein the inlet side wall (43) of both of the first and second receiving cavities (32, 34) includes a plurality of first apertures (43a) that allows flow from the respective first or second plenum into the respective first or second receiving cavity (32, 34), wherein the outlet side wall (44) of the both of the first and second receiving cavities includes a second plurality of apertures (44a) that allows flow from the respective receiving cavity and into the return portion.

4. The holding cabinet of claim 3, wherein all or an overwhelming majority of the second plurality of apertures (44a) within each of the first and second receiving cavities (32, 34) are disposed at or below a horizontal plane (3000a, 3000b) through respective receiving cavity (32, 34) that is positioned at half of a total height of the respective receiving cavity.

5. The holding cabinet of claim 4, wherein a same number of the plurality of first apertures (43a) are disposed above the horizontal plane (3000a, 3000b) as the number of the plurality of first apertures that are disposed below the horizontal plane.

6. The holding cabinet of any one of claims 1-5, wherein the heat treatment portion (110a) comprises an air handling unit (112) that includes a suction inlet that draws suction from air flowing from the return portion (140), wherein the air handling unit discharges air through a heating element (114) disposed within the heat treatment portion (110a).

7. The holding cabinet of claim 6, further comprising a temperature detector disposed within the heat treatment portion and disposed within an air flow path proximate the suction inlet of the air handling unit (112), and further comprising a controller (2000) to control the operation of the heating element based upon a measured temperature of the temperature detector.

8. A holding cabinet of any one of claims 1-7, comprising:
wherein the floor (42) of each of the first and second receiving cavities (32, 34) comprises a heating pad (62) upon which a tray (600) disposed within the respective receiving cavity (32, 34) rests directly upon the heating pad, wherein a top surface of the heating pad is flush mounted with a remaining portion of the floor within the respective receiving cavity;
wherein the ceiling (45) of each of the first and second receiving cavities (32, 34) includes a second heating pad;
wherein each of the heating pads (62) mounted upon the floor and each of the heating pads (62) mounted upon the ceiling of the respective first and second receiving cavities (32, 34) includes first and second spaced insulation layers fixed with respect to a side of the heating pad within the respective floor or ceiling;
wherein the housing further comprises a shelf (29) that is disposed between the first and second receiving cavities (32, 34), with a top of the shelf (29) establishing the floor (42) of the first receiving cavity (32) and the bottom of the shelf establishing the ceiling (45) of the second receiving cavity (34), wherein the heating pad (62) upon the floor (42) of the first receiving cavity (32) and the heating pad upon the ceiling (45) of the second receiving cavity (34) are aligned such that there is a space between the innermost of the first and second spaced insulation layers of the heating pad mounted upon the floor of the first receiving cavity and the first and second spaced insulation layers of the heating pad mounted upon the ceiling of the second receiving cavity.

9. The holding cabinet of claim 8, wherein the inlet side wall of both of the first and second receiving cavities (32, 34) includes a plurality of first apertures (43a) that allows flow from the respective first or second plenum (120a, 120b) into the respective first or second receiving cavity, wherein the outlet side wall (44) of the both of the first and second receiving cavities includes a second plurality of apertures (44a) that allows flow from the respective receiving cavity and into the return portion (140);
wherein all or an overwhelming majority of the second plurality of apertures (44a) within each of the first and second receiving cavities are disposed at or below a horizontal plane (3000a, 3000b) through respective receiving cavity that is positioned at half of a total height of the respective receiving cavity, and
wherein a same number of the plurality of first apertures (43a) are disposed above the horizontal plane (3000a, 3000b) as the number of the plurality of first apertures that are disposed below the horizontal plane.
